# FASCICULE DE BREVET EUROPEEN

(11) **EP 3 520 385 B1**
(45) Date de publication et mention de la délivrance du brevet: **24.11.2021**
(21) Numéro de dépôt: 17786965.8
(22) Date de dépôt: 28.09.2017
(51) Int. Cl.: H04N 5/225, G02B 7/00, G03B 17/56, F16M 13/04, F16M 11/12, F16M 11/18, F16M 11/20

(54) **DISPOSITIF DE PRISE DE VUE SUBJECTIVE**
VORRICHTUNG ZUR AUFNAHME DES BLICKS EINES SUBJEKTS
DEVICE FOR POINT-OF-VIEW SHOT

(30) Priorité: 29.09.2016 FR 1659379; 08.06.2017 FR 1755095
(43) Date de publication de la demande: 07.08.2019
(73) Titulaire: Revinax, 34000 Montpellier (FR)
(72) Inventeur: ROS, Maxime, 81500 Lavaur (FR); TRIVES, Jean-Vincent, 81500 Lavaur (FR)
(74) Mandataire: Cornuejols, Georges
(86) Numéro de dépôt international: PCT/FR2017/052648
(87) Numéro de publication internationale: WO 2018/060636

(56) Documents cités:
- EP-A1- 3 064 822
- WO-A1-96/15404
- CH-A2- 710 095
- GB-A- 2 173 016
- US-A1- 2004 179 170
- US-A1- 2016 209 732

## Description

### DOMAINE TECHNIQUE DE L'INVENTION

La présente invention vise un dispositif de prise de vue subjective. Elle s'applique, notamment, au domaine de la prise de vue subjective par un utilisateur depuis une position proche des yeux de l'utilisateur et de la ligne du regard de l'utilisateur.

Plus particulièrement, la présente invention s'applique dans le domaine de la formation médicale, notamment pour la prise de vue subjective d'opérations chirurgicales. La présente invention s'applique également à toute profession transmettant un savoir-faire manuel, par exemple au domaine paramédical, technique ou encore artisanal.

### ETAT DE LA TECHNIQUE

Actuellement, il existe des dispositifs de stabilisation pour une prise de vue notamment utilisés dans le cadre cinématographique, par exemple, de tels dispositifs sont commercialisés sous le nom « SteadyCam » (marque déposée). Ces dispositifs sont fixés par une ceinture autour du bas du dos d'un utilisateur manipulant la caméra. La caméra est positionnée sur un bras articulé fixé à la ceinture sur l'un des côtés de l'utilisateur. La caméra est stabilisée par un contrepoids et des moyens hydrauliques. Cependant ces dispositifs sont excessivement lourds pour un utilisateur et plus spécifiquement dans le cas d'une prise de vue subjective, l'utilisateur ne peut avoir ses deux mains libres.

On connait la demande de brevet internationale WO96/15404 qui divulgue un support de caméra passant au-dessus de l'épaule de l'utilisateur. On connait également la demande de brevet GB 2 173 016 qui divulgue un support de jumelles. Finalement, on connait la demande de brevet US 2016/0209732 qui divulgue un support de caméra stabilisateur. Tous ces documents nécessitent une orientation manuelle de la caméra lors de la prise de vue.

### OBJET DE L'INVENTION

La présente invention vise à remédier à tout ou partie de ces inconvénients. Notamment, la présente invention vise maintenir la caméra dans une position subjective stabilisée. La stabilisation permet d'avoir une meilleure qualité d'image, notamment lorsqu'il s'agit d'opérations délicates.

A cet effet, selon un premier aspect, la présente invention vise un dispositif de prise de vue subjective selon la revendication 1.

Grâce à ces dispositions, les mouvements du moyen de stabilisation et de la caméra sont amortis par des moyens mécaniques limitant les secousses dues au mouvement de l'opérateur, un chirurgien orthopédique par exemple. Notamment, chaque amortisseur permet également de répartir le poids de la caméra et du moyen de stabilisation sur le bras pour que l'opérateur portant le dispositif ne subisse pas de déséquilibre, par exemple. La caméra est positionnée au-dessus de l'utilisateur, la prise de vue est subjective. Ainsi chaque image prise par la caméra peut représenter les gestes et la position dans laquelle se tient l'utilisateur. Ainsi, un étudiant visionnant une image ou un film dont l'enregistrement a été effectué avec un tel dispositif peut plus aisément comprendre les gestes à effectuer lors d'une opération ultérieure.

Dans des modes de réalisation, le dispositif objet de la présente invention comporte au moins un moyen de fixation liant deux éléments :
- la tige de mise en position et la tige de support,
- la tige de mise en position et l'amortisseur, et/ou
- la tige de support et l'amortisseur.

Ces modes de réalisation permettent de déplacer la tige de support par rapport à la tige de mise en position en fonction de la corpulence de l'opérateur, l'amortisseur étant déplacé en fonction de la mise en position.

Dans des modes de réalisation, au moins un moyen de fixation forme au moins une liaison pivot avec l'un des éléments et au moins une liaison rotule avec l'autre élément.

L'avantage de ces modes de réalisation est de faciliter la mise en place du moyen de fixation par rapport aux deux éléments.

Dans des modes de réalisation, au moins un moyen de fixation comporte la coulisse de l'au moins une liaison pivot l'élément formant coulisseau, le moyen de fixatior comportant au moins un levier à came pour serrer le coulisseau dans la coulisse.

Ces modes de réalisation permettent de déplacer la tige de support par rapport à la tige de mise en position en fonction de la corpulence de l'opérateur.

Grâce à ces dispositions, les éléments : tige de mise en position, tige de support et amortisseur, peuvent être déplacés les uns par rapport aux autres et s'adapter à la corpulence de l'opérateur et au type de manipulation effectuée par l'opérateur, par exemple le type de chirurgie effectuée. Puis une fois l'adaptation faite, le serrage du levier à came permet de fixer en position les éléments les uns par rapport aux autres.

Dans des modes de réalisation, le moyen de fixation comporte deux leviers à came dont les leviers sont de directions opposées.

L'avantage de ces modes de réalisation est que, en cas d'efforts pour translater le coulisseau dans la coulisse, l'un des leviers de serrage se resserre si l'autre se desserre, peu importe la direction de l'effort.

Dans des modes de réalisation, l'amortisseur fonctionne principalement en compression.

L'avantage de ces modes de réalisation est d'amortir le bras de levier dû au poids de la caméra.

Dans des modes de réalisation, le moyen de stabilisation est fixé à une extrémité libre de la tige de support présentant une forme en arc de cercle.

Ces modes de réalisation permettent de rapprocher la caméra au plus proche des yeux de l'opérateur pour assurer une prise de vue subjective.

Dans des modes de réalisation, chaque tige comporte un corps et deux extrémités, l'articulation entre la tige de mise en position et la tige de support est située à une extrémité de la tige de mise en position et sur le corps de la tige de support, la tige support et la tige de mise en position forment une potence.

Ces modes de réalisation permettent de dépasser la tête de l'opérateur et de positionner la caméra au plus proche de la position des yeux de l'opérateur.

Dans des modes de réalisation, le dispositif objet de la présente invention comporte au moins un premier amortisseur fixé entre une extrémité de la tige de support et le corps de la tige de mise en position.

L'avantage de cette disposition est de positionner l'amortisseur à proximité de l'articulation et autour de l'articulation pour compenser les moments liés aux forces lors d'un mouvement de l'opérateur.

Dans des modes de réalisation, le moyen de stabilisation est fixé à l'extrémité de la tige de support posée à l'extrémité de fixation de chaque premier amortisseur.

Grâce à ces dispositions, l'amortisseur compense le bras de levier dû au poids du moyen de stabilisation et de la caméra tout en amortissant les mouvements brusques.

Dans des modes de réalisation, le dispositif objet de la présente invention comporte au moins un deuxième amortisseur entre le corps de la tige de support et le corps de la tige de mise en position.

Ces modes de réalisation permettent d'amortir de deux manières différentes les mouvements. Par exemple, un amortisseur peut travailler en compression alors que l'autre travail en traction. Ou encore, un amortisseur peut être hydraulique alors que l'autre est un amortisseur par déformation.

Dans des modes de réalisation, chaque premier et chaque deuxième amortisseur sont situés de part et d'autre de la tige de mise en position.

L'avantage de ces modes de réalisation est la répartition de poids de la tige de support sur la tige de mise en position qui facilite le port du dispositif par l'opérateur.

Dans des modes de réalisation, le deuxième amortisseur est un amortisseur de compression.

Ces modes de réalisations permettent d'équilibrer le bras en compression et en traction. De plus, l'amortissement peut être hydraulique pour l'un et mécanique pour l'autre, ainsi l'amortissement est de meilleure qualité.

Dans des modes de réalisation, la fixation d'au moins un amortisseur avec la tige de support comporte un moyen de déplacement de la fixation sur la tige de support.

Ces modes de réalisation permettent d'adapter la répartition des efforts sur les tiges pour résister aux efforts de la caméra qui créé un bras de levier.

Dans des modes de réalisation, le dispositif objet de la présente invention comporte au moins un moyen de fixation du moyen de stabilisation à une extrémité de la tige de support.

Grâce à ces dispositions, la caméra peut être positionnée au plus proche des yeux de l'opérateur et au-dessus de la scène à capturer.

Le dispositif peut comporter un support batterie sur le corps de la tige de support, du côté opposé de l'articulation par rapport à chaque moyen de fixation.

Cela permet d'équilibrer le poids de la caméra et des moyens de stabilisation avec le poids de la batterie pour faciliter le port de l'équipement par l'opérateur.

Le dispositif peut comporter au moins un moyen de fixation d'au moins un bras articulé support d'au moins une source de lumière au bras articulé.

Grâce à ces dispositions la scène est adéquatement illuminée et la capture d'image est de qualité suffisante pour la formation de futurs médecins.

Selon un deuxième aspect le dispositif de prise de vue subjective, comporte:
- un harnais fixé au corps d'un utilisateur,
- une caméra comportant au moins un objectif orienté selon une direction, la caméra étant liée au harnais par un bras positionnable longeant le dos de l'utilisateur, et positionnée au-dessus de l'utilisateur pour une prise de vue subjective selon ladite direction et
- un moyen de stabilisation de la caméra par rapport au harnais situé entre le bras positionnable et la caméra, le moyen de stabilisation comportant au moins trois moyens de rotation selon trois axes perpendiculaires, chaque moyen de rotation étant muni d'un servomoteur asservi en fonction de la position de la caméra et de la position de l'utilisateur.

Grâce à ces dispositions, l'utilisateur peut avoir les mains libres, pour effectuer une opération, par exemple. De plus, la caméra étant positionnée au dessus de l'utilisateur, la prise de vue est subjective. Ainsi chaque image prise par la caméra peut représenter les gestes et la position dans laquelle se tient l'utilisateur. Ainsi, un étudiant visionnant une image ou un film dont l'enregistrement a été effectué avec un tel dispositif peut plus aisément comprendre les gestes à effectuer lors d'une opération ultérieure.

Egalement, étant donné que la caméra peut comporter deux objectifs, les prises de vue effectuées au moyen du dispositif peuvent être représentées en trois dimensions. Notamment, ces représentations peuvent être diffusées dans des dispositifs de réalité virtuelle.

Aussi, la caméra étant stabilisée selon trois axes différents, l'image nécessite peu de post-traitement même en cas de mouvement brusque du porteur au cours de la prise de vue.

Dans certaines variantes, chaque servomoteur est asservi à au moins une donnée de position de la caméra issue d'un gyroscope.

Cela permet d'obtenir une position de la caméra indépendante de la position de la caméra par rapport au harnais.

La caméra comporte une position de prise de vue prédéterminée par rapport à chaque axe de chaque servomoteur et l'asservissement de chaque servomoteur est configuré pour :
- maintenir la caméra orientée vers une direction prédéterminée tant qu'une rotation d'un servomoteur est libre selon les deux sens de rotation pour maintenir sensiblement inchangé le cadre de la prise de vue et
- une fois une butée atteinte, déplacer la caméra dans la position de prise de vue prédéterminée pour modifier le cadre de la prise de vue.

Cela permet à l'utilisateur de se tourner légèrement, pour prendre un objet par exemple, sans que la caméra n'ait été déplacée. La caméra reste donc pointée vers le même point, peut importe le geste de l'utilisateur. Alternativement, si l'utilisateur effectue un mouvement de changement de position, en se tournant complètement, la caméra se positionne automatiquement de manière à orienter chaque objectif vers le nouveau point vu par l'utilisateur. Egalement, ce mouvement est atténué afin de rendre l'image de la prise de vue, dans le cadre d'un film, par exemple, plus fluide.

Les axes des servomoteurs correspondent aux axes de précession (appelé « yaw » en anglais), de nutation (appelé « pitch » en anglais) et d'inclinaison (appelé « tilt » en anglais) de la caméra.

L'avantage est de correspondre à des mouvements prédéfinis de la caméra dans un repère orthonormé.

Le dispositif peut comporter un quatrième servomoteur d'axe parallèle à l'axe de l'un des trois autres servomoteurs, dont l'axe correspond à l'axe de rotation propre de la caméra (appelé « roll » en anglais).

Grâce à ces dispositions, la caméra peut être stabilisée selon un plus grand nombre de paramètres et l'image est rendue plus fluide.

Le dispositif peut comporter au moins un moyen d'éclairage à diode électroluminescente (d'acronyme « DEL » ou « LED » pour « Light-Emitting Diode » en anglais) fixé à la caméra ou au bras positionnable et orienté selon la direction de chaque objectif.

Cela permet de fournir une quantité de lumière suffisante à ce que la scène capturée par la caméra soit représentative. Notamment, dans le cadre de films de chirurgies pour l'enseignement, les détails doivent être aisément repérables par la personne visionnant le film.

Chaque diode électroluminescente est mise en fonctionnement par un courant alternatif de fréquence égale à la fréquence de prise d'images par la caméra.

Grâce à ces dispositions, la durée de vie de la diode est prolongée, l'utilisateur n'est pas ébloui et la qualité des images captées, notamment dans le cadre de prises de vue continues, n'est pas dégradée par la fréquence de l'éclairage.

Au moins une diode électroluminescente est associée à un filtre polariseur et chaque objectif porte un filtre polariseur de polarisation orthogonale à la polarisation de chaque filtre polariseur associé à une diode électroluminescente.

Cela évite l'éblouissement des capteurs de chaque objectif de la caméra. Par exemple, cela atténue fortement les reflets lumineux sur les métaux.

Le dispositif peut comporter une source d'alimentation électrique autonome pour alimenter la caméra en courant électrique, la source étant située sur le harnais et configurée pour faire un contrepoids de la caméra et du moyen de stabilisation.

Cela évite que le centre de gravité du dispositif soit placé dans un endroit rendant le dispositif déséquilibré pour l'utilisateur.

Le dispositif peut comporter un émetteur-récepteur d'ondes électromagnétiques sans fil configuré pour transmettre à au moins un système électronique au moins une image captée par la caméra.

L'avantage est de transmettre directement au moins une image captée pour un apprentissage simultané des étudiants, par exemple.

Le dispositif peut comporter un moyen de stockage de chaque image captée par la caméra, moyen de stockage situé sur le harnais et configuré pour faire un contrepoids de la caméra et du moyen de stabilisation.

Cela évite que le centre de gravité du dispositif soit trop haut et rende le dispositif instable.

Le dispositif peut comporter des moyens de réglage de la position de la caméra par rapport au harnais pour une prise de vue subjective.

Grâce à ces dispositions, la caméra peut être placée directement au-dessus des yeux de l'utilisateur pour permettre une prise de vue la plus subjective.

La caméra peut comporter au moins deux objectifs orientés selon la même direction.

Cela permet d'effectuer une prise de vue en trois dimensions pour un casque de réalité virtuelle, par exemple.

### BREVE DESCRIPTION DES FIGURES

D'autres avantages, buts et caractéristiques particulières de l'invention ressortiront de la description non limitative qui suit du dispositif objet de la présente invention, en regard des dessins annexés, dans lesquels :
- la figure 1 représente, schématiquement et en perspective, un premier mode de réalisation particulier du harnais et du bras positionnable du dispositif objet de la présente invention,
- la figure 2 représente, schématiquement et en perspective, selon un axe différent, le premier mode de réalisation particulier du harnais et du bras positionnable du dispositif objet de la présente invention,
- la figure 3 représente, schématiquement et en perspective, un premier mode de réalisation particulier du moyen de stabilisation du dispositif objet de la présente invention,
- la figure 4 représente, schématiquement et en vue de face, un premier mode de réalisation particulier du moyen de stabilisation et de la caméra du dispositif objet de la présente invention,
- la figure 5 représente, schématiquement et en vue de côté, le premier mode de réalisation particulier du moyen de stabilisation et de la caméra du dispositif objet de la présente invention,
- la figure 6 représente, schématiquement, le premier mode de réalisation du dispositif objet de la présente invention,
- la figure 7 représente, schématiquement et en plan, un deuxième mode de réalisation particulier du bras positionnable objet de la présente invention,
- la figure 8 représente, schématiquement et en perspective, le deuxième mode de réalisation du bras positionnable objet de la présente invention,
- la figure 9 représente, schématiquement et en perspective, un troisième mode de réalisation particulier du bras positionnable objet de la présente invention,
- la figure 10 représente, schématiquement et en plan, le troisième mode de réalisation du bras positionnable objet de la présente invention et
- la figure 11 représente, schématiquement et en perspective, une mode de réalisation particulier d'un moyen de fixation d'un bras positionnable.

### DESCRIPTION D'EXEMPLES DE REALISATION DE L'INVENTION

La présente description est donnée à titre non limitatif, chaque caractéristique d'un exemple pouvant être combinée à toute autre caractéristique de tout autre exemple de manière avantageuse. Par ailleurs, chaque paramètre d'un exemple de réalisation peut être mis en œuvre indépendamment d'autres paramètres dudit exemple de réalisation.

On note dès à présent que les figures ne sont pas à l'échelle.

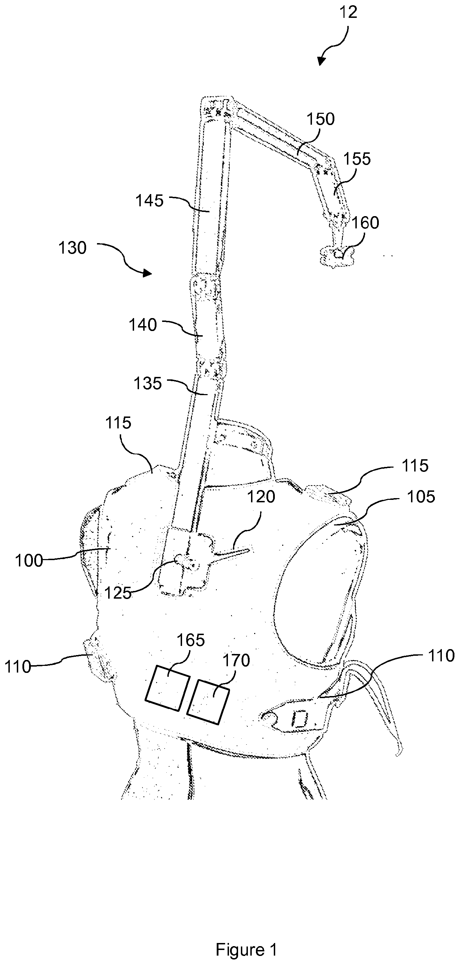

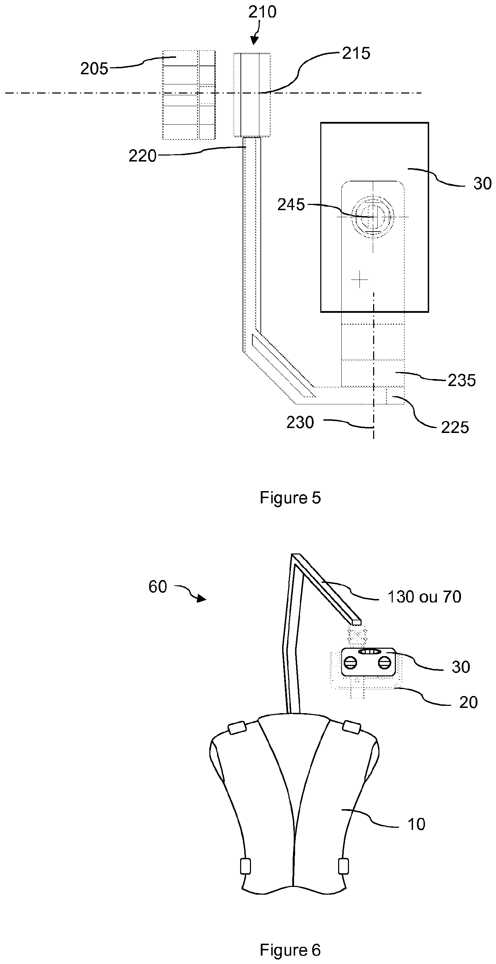

La figure 6 représente le dispositif 60 objet de la présente invention. Le dispositif 60 objet de la présente invention comporte un harnais 10, un bras positionnable, 130 ou 70, un moyen de stabilisation 20 et une caméra 30 décrits ci-après en regard des figures 1 à 5.

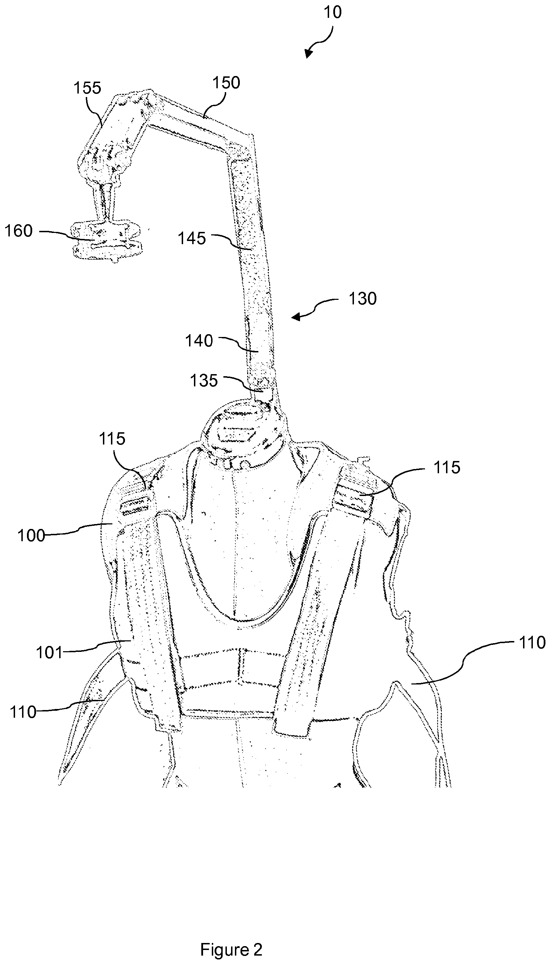

On observe, sur les figures 1 et 2, qui ne sont pas à l'échelle, une vue schématique d'un mode de réalisation du harnais 10 et du bras positionnable 130 du dispositif objet de la présente invention.

Le harnais 10 est fixé au dos d'un utilisateur. Le harnais 10 comporte au moins une coque rigide 100 configurée pour éviter toute déformation de la coque due au poids du dispositif et notamment d'une caméra 30 et d'un moyen de stabilisation 20. Le harnais 10 comporte également un revêtement intérieur 105 en tissu rembourré afin de présenter plus de confort pour l'utilisateur lors de la prise de vue.

La coque rigide 100 est située sur le dos de l'utilisateur et recouvre au moins partiellement les épaules et la cage thoracique de l'utilisateur. La coque rigide 100 est associée à un plastron 101 sur le torse de l'utilisateur. Le plastron 101 est relativement souple et en matériau rembourré pour présenter plus de confort pour l'utilisateur.

Le plastron 101 recouvre au moins partiellement la coque rigide 100 au niveau de la cage thoracique et des épaules.

Le plastron 101 est assemblé à la coque rigide 100 au niveau des épaules de l'utilisateur par un moyen de serrage 115 sur chaque épaule et au niveau de la cage thoracique par un moyen de serrage 110 sur chaque côté de la cage thoracique de l'utilisateur. Les moyens de serrage, 110 et/ou 115, sont des sangles insérées dans des attaches correspondantes aux sangles, par exemple.

Dans d'autres variantes le plastron 101 est fixé à la coque rigide par sertissage ou par couture, par exemple. Et le plastron 101 comporte deux parties serrées l'une à l'autre par des moyens de serrage, tels des sangles dans des attaches correspondantes aux sangles, par exemple.

Le harnais 10 supporte un bras positionnable 130 longeant le dos de l'utilisateur. Préférentiellement, le bras positionnable 130 est au niveau de la colonne vertébrale de l'utilisateur pour éviter un déséquilibrage du corps dû au dispositif 10 et notamment, l'application d'une force sur uniquement un côté du corps.

Le bras positionnable 130 peut être fixé sur la coque rigide 100 au niveau de la colonne vertébrale, entre les omoplates, par exemple.

Dans d'autres exemples (non représentés), le harnais présente une coque rigide attachées à un support en tissus. Le support en tissus formant au niveau des lombaires de l'utilisateur et comportant deux bretelles configurées pour être placées autour des épaules de l'utilisateur. Le support en tissus peut également comporter une sangle configurée pour entourer les hanches ou l'abdomen de l'utilisateur. Dans certains exemples, le support en tissus comporte un rembourrage pour être ergonomique.

Le bras positionnable 130 prend la forme d'un ensemble de tiges rectilignes, de profilé rectangulaire ou circulaire, par exemple, articulées par des charnières d'axes parallèles. Chaque tige étant sensiblement en retrait du corps de l'utilisateur. Dans les figures 1 et 2, le bras positionnable 130 comporte 5 tiges, dont les longueurs et positions approximatives sont décrites ci-après :
- une première tige 135 longeant la colonne vertébrale de l'utilisateur jusqu'à la base du crâne, au niveau de la jonction avec la nuque,
- une deuxième tige 140 longeant le crâne de l'utilisateur, de la base de la nuque au sommet du crâne de l'utilisateur,
- une troisième tige 145 surélevant la caméra 30 par rapport au crâne de l'utilisateur,
- une quatrième tige 150 positionnant la caméra 30 sur l'avant du crâne de l'utilisateur et
- une cinquième tige 155 positionnant la caméra 30 au niveau de l'arcade sourcilière de l'utilisateur.

Dans les figures 1 et 2, les charnières sont parallèles à l'axe entre les épaules de l'utilisateur. Chaque charnière peut être serrée au moyen d'une vis, par exemple.

La cinquième tige 155 comporte des moyens de fixation 160 des moyens de stabilisation 20 au bras positionnable 130.

Ces exemples présentent l'avantage d'être adaptables à des utilisateurs des différentes tailles avec des réglages simples.

Dans d'autres exemples simplifiés (non représentés), le bras positionnable 130 comporte une unique tige sensiblement en forme d'arc ou de « L » inversé et configurée pour positionner la caméra 30 au niveau de l'arcade sourcilière de l'utilisateur.

Le harnais 10 comporte des moyens de réglage, 120 et 125, de la position de la caméra 30 par rapport au harnais 10 pour une prise de vue subjective. Les moyens de réglage, 120 et 125, sont situés entre le bras positionnable, 130 ou 70, et le harnais 10.

Les moyens de réglage 125 sont des moyens de réglage longitudinaux et les moyens de réglages 120 sont des moyens de réglages rotatifs. La tige 135 du bras positionnable 130, ou la tige de mise en position 700 du bras positionnable 70, constitue un coulisseau qui est inséré dans une ouverture des moyens de réglages 125 constituant une coulisse. La coulisse et le coulisseau forment une liaison glissière dont l'axe est l'axe de la tige 135.

Les moyens de réglages 125 comportent, un ergot d'axe perpendiculaire à l'axe de la liaison glissière s'insérant dans une fente sur la coque rigide 100 du harnais.la fente et l'ergot formant les moyens de réglage 120 et constituent une liaison pivot ainsi qu'une glissière pour déplacer le bras positionnable, 130 ou 70, d'une épaule à l'autre.

Les moyens de réglage, 120 et 125, comportent des moyens de serrage pour bloquer le bras positionnable, 130 ou 70, dans une position par rapport au harnais 10. Ces modes de réalisation permettent de fixer le bras positionnable, 130 ou 70, par rapport au harnais 10 dans une position avant d'entamer la prise de vue.

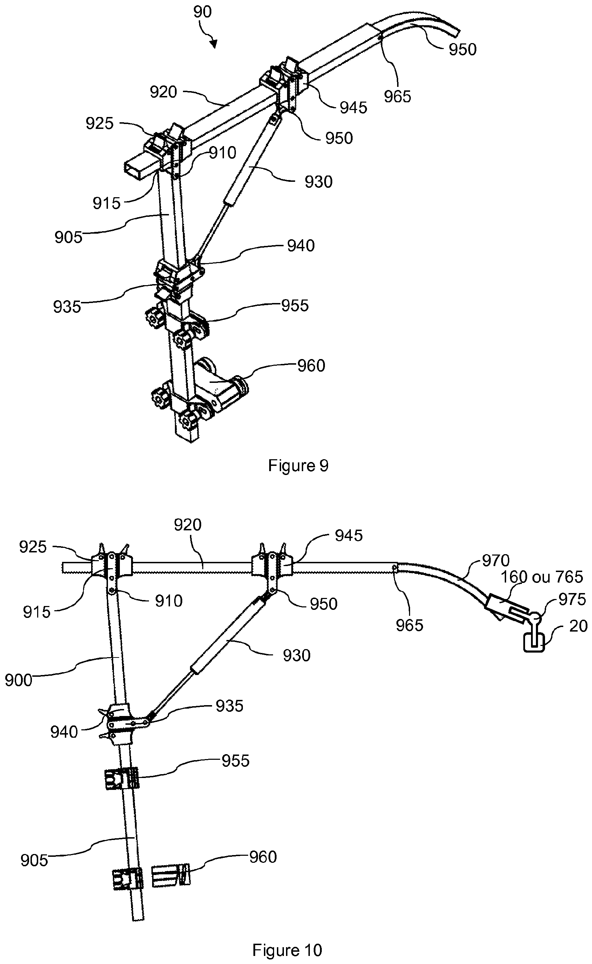

Des réalisations de moyens de réglage alternatifs, 950 et 955 sont décrites en regard de la figure 9.

Le dispositif peut comporter une source d'alimentation électrique autonome 165 pour alimenter la caméra 30 en courant électrique, la source étant située sur le harnais 10 et configurée pour faire un contrepoids de la caméra 30 et du moyen de stabilisation 20. La source d'alimentation électrique autonome 165 peut être une batterie au lithium ou toute autre source d'alimentation électrique autonome connue de l'homme du métier, par exemple. La source d'alimentation électrique autonome 165 est placée au niveau de la base de la coque rigide 100 proche des reins de l'utilisateur et centré au niveau de la colonne vertébrale, par exemple.

Le harnais 10 et le bras positionnable, 130 ou 70, peuvent comporter des moyens de connexion de la caméra 30 à la source d'alimentation électrique autonome 165.

Le dispositif peut comporter un moyen de stockage 170 de chaque image captée par la caméra 30 situé sur le harnais 10 et configuré pour faire un contrepoids de la caméra 30 et du moyen de stabilisation 20. Le moyen de stockage 170 est un disque dur à mémoire flash, ou tout moyen de stockage de signaux électroniques connus de l'homme du métier ; par exemple. Le moyen de stockage 170 est placé au niveau de la base de la coque rigide 100 proche des reins de l'utilisateur et centré au niveau de la colonne vertébrale, par exemple, au-dessus, en dessous ou juxtaposé à la source d'alimentation électrique autonome 165, le cas échéant.

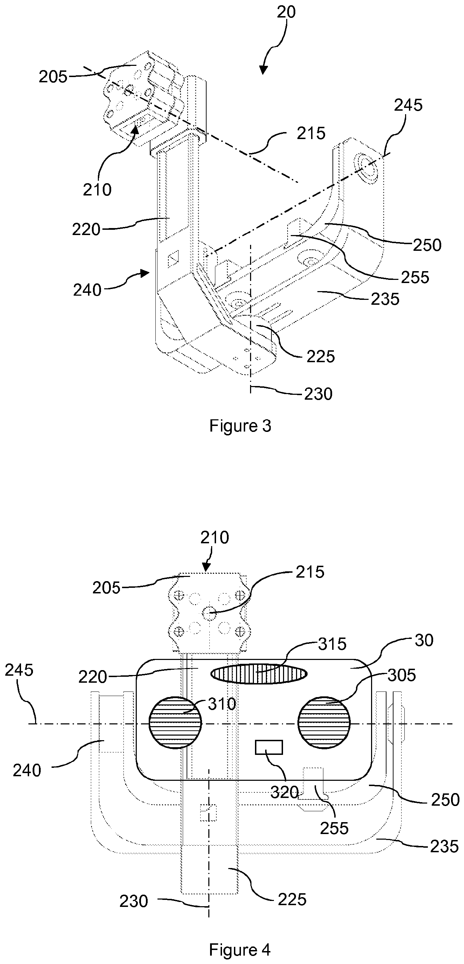

On observe, sur les figures 3, 4 et 5, qui ne sont pas à l'échelle, une vue schématique du moyen de stabilisation 20 et de la caméra 30 du dispositif objet de la présente invention.

En général, la caméra 30 comporte au moins un objectif, 305 et/ou 310, orienté selon une direction. Dans l'exemple représenté, la caméra 30 comporte deux objectifs, 305 et 310. Cependant, la description qui suit de cet exemple particulier pourrait être mis en œuvre en général.

La caméra 30 comporte au moins deux objectifs, 305 et 310, orientés dans la même direction. Dans les figures 3, 4 et 5, chaque objectif, 305 et 310, est orienté dans la direction du torse de l'utilisateur. La caméra 30 est liée au harnais 10 par un bras positionnable 130 longeant le dos de l'utilisateur, et positionnée au-dessus de l'utilisateur pour une prise de vue subjective.

L'association des deux objectifs 305 et 310 de la caméra est configurée pour effectuer une prise de vue en trois dimensions. Préférentiellement, chaque objectif présente un angle de prise de vue supérieur à 90°.

Dans des exemples préférentiels, la caméra 30 est une caméra commercialisée par GoPro sous le nom GoPro 3 (marques déposées). La caméra GoPro 3 effectue automatiquement une synchronisation du cadre de la prise de vue et une synchronisation temporelle des objectifs. Cela simplifie le traitement d'image effectué par la suite.

Dans certaines variantes, la caméra 30 présente trois objectifs, le troisième objectif, dit objectif de « calage », est placé au milieu de la distance entre les deux autres objectifs, 305 et 310 tels que décrits ci-dessus. L'objectif de calage permet de reconstruire l'image en trois dimensions avec plus de facilité puisque des éléments distinctifs dans les images des deux autres objectifs, 305 et 310, peuvent être informatiquement replacées par rapport à des éléments distinctifs de l'image issu de l'objectif de calage.

Dans les figures 4 et 5, le dispositif comporte au moins un moyen d'éclairage 315 à diode électroluminescente (d'acronyme « DEL » ou « LED » pour « Light-Emitting Diode » en anglais) fixé à la caméra 30 et orienté selon la direction des objectifs 305 et 310. Ainsi, la zone filmée est constamment éclairée. Préférentiellement, le moyen d'éclairage 315 est fixé à la caméra 30 et est donc stabilisé simultanément à la caméra 30. Le moyen d'éclairage 315 peut être situé au-dessus de chaque objectif, 310 et 305.

Dans des exemples non représentés, le moyen d'éclairage 315 est fixé au bras positionnable, 130 ou 70, proche des moyens de fixation, 160 ou 765.

Préférentiellement, chaque diode électroluminescente présente une puissance entre 7 et 215 lumens.

Le dispositif peut comporter deux moyens d'éclairage : un premier moyen d'éclairage 315 dit «éclaire focalisé» fixée à la caméra 30 et émettant une lumière sensiblement focalisée dans la même direction que chaque objectif, 305 et 310, et un deuxième moyen d'éclairage dit «éclairage d'ambiance » fixé au bras positionnable 130 et émettant une lumière diffuse dans une direction générale sensiblement similaire à la direction des objectifs, 305 et 310.

Préférentiellement, chaque diode électroluminescente est mise en fonctionnement par un courant alternatif de fréquence égale à la fréquence de prise d'images par la caméra 30. Notamment, le clignotement des diodes électroluminescentes est synchronisé avec la prise de vue par la caméra 30. Cela permet d'augmenter la puissance lumineuse émise au-delà de la puissance lumineuse nominale, de limiter l'usure de chaque diode électroluminescente, de limiter la consommation en énergie électrique sans affecter la séquence d'images capturée par la caméra.

Au moins une diode électroluminescente est associée à un filtre polariseur et chaque objectif, 305 et 310, porte un filtre polariseur de polarisation orthogonale à la polarisation de chaque filtre polariseur associé à une diode électroluminescente. Cela permet de limiter l'éblouissement dû aux reflets, notamment sur des surfaces métalliques ou à la surface des organes, les tissus organiques dépolarisant les rayons lumineux polarisés.

Le dispositif 10 comporte un moyen de stabilisation 20 de la caméra 30 par rapport au harnais 10 situé entre le bras positionnable, 130 ou 70, et la caméra 30. Le moyen de stabilisation 20 est fixé aux moyens de fixation, 160 ou 765, du bras positionnable, 130 ou 70. Et le moyen de stabilisation 20 comporte les moyens de fixations correspondants et connus de l'homme du métier.

La caméra 30 comporte un gyroscope, chaque servomoteur, 210, 225 et 240 du moyen de stabilisation 20 étant asservi à au moins une donnée de position de la caméra 30 issue d'un gyroscope. Préférentiellement, la caméra 30 comporte deux gyroscopes orientés différemment et configurés pour localiser la caméra 30 dans l'espace.

Le moyen de stabilisation 20 comporte des moyens de connexion de la source d'alimentation électrique autonome 165 et/ou au moyen de stockage 170.

Le moyen de stabilisation 20 comporte au moins trois moyens de rotation selon trois axes perpendiculaires, 215, 230 et 245, chaque moyen de rotation étant muni d'un servomoteur 210, 225 et 240, asservi en fonction de la position de la caméra 30 et de la position de l'utilisateur. Les moyens de rotation sont au moins un arbre inséré dans un alésage, par exemple.

La position de l'utilisateur est évaluée par un gyroscope, dans la caméra 30 ou dans chaque servomoteur, 210, 225 et 240. La position de l'utilisateur est évaluée à partir d'une position prédéterminée. La position prédéterminée, peut être une position mesurée par le gyroscope au début de la prise de vue. Chaque servomoteur, 210, 225 et 240, est un moteur sans balais (appelé « brushless motor » en anglais, également dénommé « machine synchrone autopilotée à aimants permanents » en français).

Préférentiellement, chaque servomoteur, 210, 225 et 240, est coffré pour qu'aucun câble ne sorte des servomoteurs, 210, 225 ou 240. Cela permet d'utiliser un tel dispositif dans des salles nécessitant des conditions d'hygiène particulières connues sous le nom de « salle blanche » répondant à la norme ISO 14644-1.

Le moyen de stabilisation 20 comporte des moyens de fixation 205 correspondant aux moyens de fixation 160 du bras repositionnable 130 ou aux moyens de fixation 765 du bras positionnable 70. Un premier servomoteur 210 selon un premier axe 215 effectue une jonction entre les moyens de fixation 205 et un premier support 220. Dans l'exemple représenté, le premier axe 215 est un axe d'inclinaison (appelé « tilt » en anglais) de la caméra 30. L'axe 215 est excentré par rapport au centre de gravité de la caméra 30. Le servomoteur 210 régit donc l'angle, dit « angle d'inclinaison » entre le centre de gravité de la caméra dans la position prédéterminée dans un plan normal à l'axe 215 et le centre de gravité de la caméra 30 dans une position suite à un mouvement. Le servomoteur 210 tend à rendre l'angle d'inclinaison nul pour replacer la caméra 30 dans la position prédéterminée.

Le premier servomoteur 210 permet de palier aux mouvements de rotation du tronc de l'utilisateur tel qu'une épaule ou l'autre est rapprochée du sol, produisant ainsi courbure latérale dans le tronc de l'utilisateur. Chaque objectif, 305 et 310, la caméra 30 est maintenue selon la position prédéterminée.

Le premier support 220 a une forme de « L » tel que la caméra 30 repose sur l'une des branches du « L » au moyen d'un deuxième support 235 et d'un troisième support 250, l'autre branche étant liée au servomoteur 210. L'angle du « L » peut comporter un chanfrein ou un arrondi.

La caméra peut être suspendue au premier support 220 au moyen du deuxième support 235 et du troisième support 250.

Le deuxième servomoteur 225 d'axe 230, perpendiculaire à au premier axe 215 est situé entre le premier support 220 et le deuxième support 235. Dans le mode de réalisation représenté, le deuxième axe 230 est l'axe de précession (appelé « yaw » en anglais). Le deuxième axe 230 comporte le centre de gravité de la caméra 30. Le deuxième servomoteur 225 tend à modifier l'angle de la caméra 30 tel que les objectifs de la caméra, 305 et 310, présente un cadre de prise de vue sensiblement inchangée, notamment selon une horizontale de la prise de vue.

Le deuxième servomoteur 225 permet de palier aux mouvements de rotation des épaules d'un utilisateur vers la droite ou la gauche, produisant ainsi une torsion du tronc de l'utilisateur, chaque objectif, 305 et 310, la caméra 30 étant maintenu selon la position prédéterminée.

Le deuxième support 235 présente une forme de « U ». Le troisième support 250 est fixé aux extrémités du « U » par des moyens de rotation et le troisième servomoteur 240. Les angles du « U » peuvent comporter un chanfrein ou être arrondis.

Le troisième servomoteur 240 est selon un troisième axe 245 perpendiculaire au premier axe 215 et au deuxième axe 230. Le troisième servomoteur 240 est situé entre le deuxième support 235 et le troisième support 250, aux extrémités du deuxième support 235. Le troisième axe 245 comporte le centre de gravité de la caméra 30. Dans l'exemple représenté, le troisième axe 245 est l'axe de nutation (appelé « pitch » en anglais). Le troisième servomoteur 240 tend à modifier l'angle de la caméra 30 tel que les objectifs, 305 et 310, de la caméra 30 présente un cadre de prise de vue sensiblement inchangée, notamment selon une verticale de la prise de vue.

Le troisième servomoteur 240 permet de palier aux mouvements de rotation du tronc d'un utilisateur vers l'avant ou vers l'arrière lorsqu'un utilisateur est debout, produisant ainsi une courbure du tronc de l'utilisateur, chaque objectif, 305 et 310, de la caméra 30 étant maintenu selon la position prédéterminée.

Le troisième support 250 présente une forme de « U », inclus dans le deuxième support 235. Les extrémités du « U » du troisième support 250 étant fixées aux extrémités du « U » du deuxième support par des moyens de rotation et le troisième servomoteur 240. Les angles du « U » peuvent comporter un chanfrein ou être arrondis.

Le deuxième et le troisième axe, 230 et 245, définissent un plan.

Le troisième support peut comporter des moyens d'alimentation et/ou de communication 255 liés aux moyens de stockage 170 et/ou à la source d'alimentation électrique autonome 165.

La caméra 30 est emmanchée sur les moyens d'alimentation et/ou de communication 255 dans la forme de « U » du troisième support 250. Au moins trois bords de la caméra 30 sont entourés par le troisième support 250.

Préférentiellement, la caméra 30 comporte une position de prise de vue prédéterminée par rapport à chaque axe, 215, 230 et 245, de chaque servomoteur, 210, 225 et 240, et l'asservissement de chaque servomoteur, 210, 225 et 240, est configuré pour :
- maintenir la caméra 30 orientée vers une direction prédéterminée tant qu'une rotation d'un servomoteur, 210, 225 et 240, est libre selon les deux sens de rotation pour maintenir sensiblement inchangé le cadre de la prise de vue et
- une fois une butée atteinte, déplacer la caméra 30 dans la position de prise de vue prédéterminée pour modifier le cadre de la prise de vue.

Si l'une des butées de l'un des servomoteurs, 210, 225 et/ou 240 est atteinte, le servomoteur en butée effectue une rotation jusqu'à la position enregistrée lors de la définition de la position prédéterminée sur l'axe de la caméra concerné par ledit servomoteur. La position prédéterminée peut être, la position de la caméra 30 au début de la prise de vue, ou la position dans laquelle chaque servomoteur, 210, 225 et 240, a effectué une rotation nulle. La position dans laquelle chaque servomoteur, 210, 225 et 240, a effectué une rotation nulle, est la position pour laquelle chaque servomoteur, 210, 225 et 240, peut effectuer autant de tours selon un sens de rotation que selon l'autre sens de rotation.

Ces réalisations sont particulièrement utiles, dans le cadre de la médecine, lorsqu'une opération est filmée par le chirurgien, pour ne pas déplacer le cadre de vue lorsque le chirurgien se tourne pour chercher un outil, ce qui est un mouvement bref, et pour modifier le cadre de vue, de façon stabilisée et atténuée, lorsque le chirurgien effectue une opération complémentaire à l'opération de durée plus importante.

Ces réalisations sont également utiles dans tout domaine pour lequel ur savoir-faire manuel peut être transmis.

Dans des exemples (non représentés), le dispositif objet de la présente invention comporte, un quatrième servomoteur d'axe parallèle à l'axe de l'un des trois autres servomoteurs, dont l'axe correspond à l'axe de rotation propre de la caméra (appelé « roll » en anglais). Le quatrième servomoteur est situé entre le troisième support et la caméra, selon un axe parallèle au premier axe 215 tel que le centre de gravité de la caméra est confondu avec l'intersection du deuxième axe 230, du troisième axe 245 et du quatrième axe. Le deuxième axe 230, le troisième axe 245 et le quatrième axe définissant un repère orthogonal d'origine, le centre de gravité de la caméra 230.

Le quatrième servomoteur 225 tend à modifier l'angle de la caméra 30 tel que les objectifs de la caméra, 305 et 310, présentent un cadre de prise de vue sensiblement inchangée, notamment selon l'axe de visée des objectifs. Ceci permet d'éviter des tremblements de faible ampleur de la caméra qui peuvent être dérangeantes lors du visionnage des images captées.

Le dispositif peut comporter un émetteur-récepteur 320 d'ondes électromagnétiques sans fil configuré pour transmettre à au moins un système électronique (non représenté) au moins une image captée par la caméra 30.

L'émetteur-récepteur 320 d'ondes électromagnétiques sans fil peut être un émetteur-récepteur Bluetooth (marque déposée), Wi-Fi (marque déposée) ou selon toute autre norme connue de l'homme du métier.

L'émetteur-récepteur 320 d'ondes électromagnétiques sans fil est préférentiellement au niveau du harnais 10 du dispositif, proche de la source d'alimentation électrique autonome 165 et/ou du dispositif de stockage 170.

Dans certaines variantes, une deuxième caméra comportant l'émetteur-récepteur 320 d'ondes électromagnétiques sans fil est positionnée entre au moins deux objectifs de la caméra 30. Cela permet de faciliter de cadrage tout en transmettant des données de faible importance par rapport aux données issues de la caméra 30.

Chaque image captée peut subir un traitement d'image par un microprocesseur, de stabilisation numérique ou tout autre traitement d'image.

Le dispositif est muni d'un microprocesseur configuré pour asservir les servomoteurs, 210, 225, 240, à la position de l'utilisateur en fonction de la position prédéterminée et pour commander la prise de vue, le stockage, la communication sans fil et pour gérer l'alimentation électrique de la caméra 30. Notamment, chaque gyroscope capte des données de direction de mouvement et de puissance de mouvement qui sont transmises au microprocesseur. Puis, le microprocesseur commande chaque servomoteur, 210, 225 ou 240, pour compenser le mouvement en fonctions des données captées par chaque gyroscope.

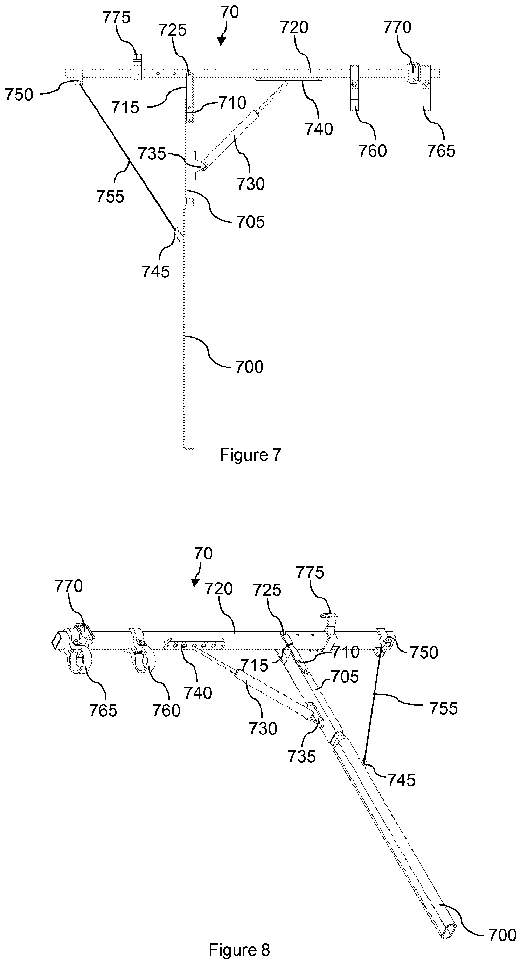

On observe, sur la figure 7, un bras positionnable 70 d'un dispositif 60 de prise de vue subjective. Le dispositif 60 comporte :
- un harnais 10 fixé au corps d'un utilisateur,
- une caméra 30 comportant au moins un objectif, 305 ou 310, orienté selon une direction, la caméra étant liée au harnais par un bras positionnable 70 longeant le dos de l'utilisateur, et positionnée au-dessus de l'utilisateur pour une prise de vue subjective selon ladite direction, le bras positionnable 70 comportant une tige de mise en position 700 sur le harnais 10 articulé avec une tige de support 720 de la caméra 30 et au moins un amortisseur, 755 ou 730, du mouvement entre la tige de mise en position 700 et la tige de support 720 et
- un moyen de stabilisation 20 de la caméra par rapport au harnais situé entre le bras positionnable 70 et la caméra 30.

La tige de mise en position 700 est fixée par une extrémité libre au harnais 10. Préférentiellement, la tige est fixée aux moyens de réglage, 120 et 125, du harnais 10. La tige de mise en position 700 est préférentiellement un tronc de cylindre creux. Pour rappel, un tronc de cylindre est un tronc d'une surface réglée dont les génératrices sont parallèles et suivent une courbe directrice fermée. Un tronc de cylindre creux possède donc deux courbes directrices l'une inscrite dans l'autre. Dans l'exemple représenté, la courbe directrice de la forme intérieure et de la forme extérieure est de forme oblongue.

La tige de mise en position peut comporter une tige d'adaptation 705. La tige d'adaptation 705 s'insère dans la forme intérieure de la tige de mise en position 700 et se bloque en mouvement de manière réversible par des moyens connus de l'homme du métier, tels une vis de serrage après encastrement de la tige d'adaptation dans la tige de mise en position 700. La tige d'adaptation 705 permet de régler la hauteur de la tige de support 720 et donc des moyens de stabilisation 20 et de la caméra 30.

La tige d'adaptation 705 comporte des moyens d'articulation 715 avec la tige de support 720. Les moyens d'articulation 715 sont, par exemple, deux plaques fixées par vissage à un trou taraudé 710 de l'extrémité de la tige d'adaptation 705 dans le prolongement de la tige d'adaptation 705. Et les moyens d'articulation 715 comportent un arbre de rotation inséré dans un alésage 725 perpendiculaire à l'axe entre les extrémités de la tige de support 720. Ainsi, la tige de mis en position 700 est dans le prolongement de la tige d'adaptation 705 et fixé par rapport au plaques 715. Et, les plaques 715 maintiennent fixement un arbre traversant un alésage 725 du corps de la tige de support 720 tels que la tige de mise en position 700 prolongée de la tige d'adaptation 705 forment une potence articulée avec la tige de support 720. L'arbre traversé par l'alésage 725 forme une liaison pivot entre la tige de mise en position 100 et la tige de support 720.

Dans les réalisations sans tige d'adaptation 705, la tige de mise en positior 700 comporte les moyens d'articulation 715.

La tige de support 720 comporte plusieurs alésages 725 pour adapter la distance de la caméra 30 par rapport aux yeux de l'opérateur afin d'avoir une vue la plus proche de celle de l'opérateur.

La tige de support 720 est préférentiellement un tronc de cylindre creux. Dans l'exemple représenté, la courbe directrice de la forme intérieure et de la forme extérieure est de forme oblongue et peut être également rectangulaire. Un tronc de cylindre creux permet de limiter le poids du dispositif 60.

Plus généralement, chaque tige comporte un corps et deux extrémités et la tige de support 720 est fixé par une liaison pivot avec la tige de mise en position 700 telles qu'une représentation filaire des tiges, 700 et 720, seraient sensiblement dans un même plan quel que soit l'angle entre la tige de support 720 et la tige de mise en position 700.

Préférentiellement, l'articulation entre la tige de mise en position 700 et la tige de support 720 est située à une extrémité de la tige de mise en position 700 et sur le corps de la tige de support 720, la tige support 720 et la tige de mise 700 en position forment une potence.

Le bras positionnable 70 comporte au moins un premier amortisseur 755 fixé entre une extrémité de la tige de support 720 et le corps de la tige de mise en position 700.

La tige de support 720 comporte, à une extrémité, des moyens de fixation, 760 et 765, du moyen de stabilisation 20. Les moyens de fixation, 760 et 765 peuvent enserrer un moyen de commande de la caméra 30.

Le premier amortisseur 755 est fixé à l'autre extrémité de la tige de support 720. Le premier amortisseur 755 fonctionne principalement en traction. C'est-à-dire que plus de la moitié des efforts amortis par le premier amortisseur 755, exercent une traction sur le premier amortisseur 755. Le premier amortisseur 755 est un ressort en traction, par exemple. Dans certaines réalisations, le premier amortisseur 755 est un vérin hydraulique ou pneumatique en traction ou en compression.

Le premier amortisseur 755 est fixé au corps de la tige de mise en position 700. Préférentiellement, le moyen de fixation 745 du premier amortisseur 755 est situé proche de l'extrémité de la tige de mise en position 700 joignant la tige de mise en position 700 à la tige d'adaptation 705 qui forment un ensemble.

Le moyen de fixation 745 est, par exemple, un ergot plat, soudé ou fixé à la tige 700, comportant un trou, le trou étant traversé par un crochet lié à une extrémité du premier amortisseur 755.

La fixation 750 du premier amortisseur 755 à la tige de support 720 peut être similaire au moyen de fixation 745. Ou, la fixation 750 du premier amortisseur 755 peut être disposée sur un moyen de déplacement de la fixation 750 sur la tige de support 720. Le moyen de déplacement est, par exemple, un anneau entourant partiellement la tige de support 720 pouvant être serré par serrage d'un boulon. Le moyen de déplacement peut donc être fixé ou, lorsque desserré, se déplacer sur la tige de support 720. La fixation 755 est alors un alésage pratiqué dans l'anneau ou dans un ergot comporté par l'anneau.

Les fixations, 745 et 755, sont positionnées tels que le premier amortisseur 755 peut être joint à chaque fixation, 745 et 755, sans rencontrer de matière.

Le dispositif 10 comporte au moins un deuxième amortisseur 730 entre le corps de la tige de support 720 et le corps de la tige de mise en position 100.

Le deuxième amortisseur 730 est fixé au corps de la tige de support 720 entre l'articulation, 715 et 725, avec la tige d'adaptation 705 et l'extrémité de la tige de support 720 comportant le moyen de stabilisation 20. Le deuxième amortisseur 730 est un amortisseur de compression, tel un vérin en compression, par exemple. Dans des modes de réalisation, le deuxième amortisseur 730 est un vérin hydraulique ou pneumatique, ou encore un ressort. Le deuxième amortisseur 730 peut fonctionner en traction ou en compression.

Le deuxième amortisseur 730 est fixé au corps de la tige d'adaptation 705. Préférentiellement, le moyen de fixation 735 du premier amortisseur 730 est situé proche de l'extrémité de la tige d'adaptation 705 joignant la tige de mise en position 700 à la tige d'adaptation 705 qui forment un ensemble.

Le moyen de fixation 735 est, par exemple, un ergot plat, soudé ou fixé à la tige 720, comportant un trou, le trou étant traversé par un crochet à une extrémité du deuxième amortisseur 730. Le trou peut également être traversé par un écrou inséré dans un trou lié crochet à une extrémité du deuxième amortisseur 730.

La fixation 740 du deuxième amortisseur 730 à la tige de support 720 peut être similaire au moyen de fixation 735. Ou, la fixation 740 du deuxième amortisseur 740 peut être disposée sur un moyen de déplacement de la fixation 740 sur la tige de support 720. Le moyen de déplacement est, par exemple un alésage parmi plusieurs alésages alignés de la tige de support 720 dans lequel est fixée une extrémité du deuxième amortisseur 730.

Les fixations, 735 et 740, sont positionnées tels que le deuxième amortisseur 730 peut être joint à chaque fixation, 735 et 740, sans rencontrer de matière.

Le bras 70 peut comporter plusieurs premiers amortisseurs 755 montés en parallèle. Le bras 70 peut aussi comporter plusieurs deuxièmes amortisseurs 730 montés en parallèle.

Préférentiellement, chaque premier et chaque deuxième amortisseur, 730 et 755, sont situés de part et d'autre de la tige de mise en position. L'articulation, 710, 715 et 720, entre la tige de support 720 et la tige de mise en position 700 jointe à la tige d'adaptation 705 sépare la tige de support en deux parties. Préférentiellement, les moyens de fixation 750 sont sur l'une des parties et les moyens de fixation 740 sont sur l'autre partie. Préférentiellement, les moyens de fixation 740 sont sur la partie comportant les moyens de fixation, 760 et 765, du moyen de stabilisation.

Dans certaines réalisations, le bras 70 comporte, un support 775 de batterie sur le corps de la tige de support 20, du côté opposé de l'articulation, 710, 715 et 720, par rapport à chaque moyen de fixation 760 et 765. Le support de batterie 775 est pas exemple une pince, fixée à la tige de support 20.

Dans certaines réalisations, bras 70 comporte, au moins un moyen de fixation 770 d'au moins un bras articulé support d'au moins une source de lumière. Le moyen de fixation peut être un anneau serrable par un boulon placé autour de la tige de support 720. L'anneau serrable comportant des moyens de fixation du bras connus de l'homme du métier.

On observe, sur la figure 9, un bras positionnable 90 d'un dispositif 60 de prise de vue subjective. Le dispositif 60 comporte :
- un harnais 10 fixé au corps d'un utilisateur,
- une caméra 30 comportant au moins un objectif, 305 ou 310, orienté selon une direction, la caméra étant liée au harnais par un bras positionnable 90 longeant le dos de l'utilisateur, et positionnée au-dessus de l'utilisateur pour une prise de vue subjective selon ladite direction, le bras positionnable 90 comportant une tige de mise en position 905 sur le harnais 10 articulé avec une tige de support 920 de la caméra 30 et au moins un amortisseur 930 du mouvement entre la tige de mise en position 905 et la tige de support 920 et
- un moyen de stabilisation 20 de la caméra par rapport au harnais situé entre le bras positionnable 90 et la caméra 30.

La tige de mise en position 905 est fixée par une extrémité libre au harnais 10. Préférentiellement, la tige est fixée aux moyens de réglage, 955 et 960, du harnais 10. La tige de mise en position 905 est préférentiellement un tronc de cylindre creux. Pour rappel, un tronc de cylindre est un tronc d'une surface réglée dont les génératrices sont parallèles et suivent une courbe directrice fermée. Un tronc de cylindre creux possède donc deux courbes directrices l'une inscrite dans l'autre. Dans l'exemple représenté, la courbe directrice de la forme intérieure et de la forme extérieure est de forme oblongue, préférentiellement rectangulaire.

Le harnais 10 comporte des moyens de réglage, 955 et 960, de la position de la caméra 30 par rapport au harnais 10 pour une prise de vue subjective. Les moyens de réglage, 955 et 960, sont situés entre le bras positionnable 90 et le harnais 10.

Les moyens de réglage, 955 et 960, sont des moyens de réglage longitudinaux permettant de régler la distance verticale entre la tige de support 920 et le harnais lorsque le harnais est porté par un opérateur. La tige de mise en position 905 du bras positionnable 90, ou la tige de mise en position 700 du bras positionnable 70, constitue un coulisseau qui est inséré dans une ouverture des moyens de réglages, 955 et 960, constituant une coulisse. La coulisse et le coulisseau forment une liaison glissière dont l'axe est l'axe de la tige de mise en position 905.

Les moyens de réglage, 955 et 960, comportent des moyens de serrage pour bloquer le bras positionnable, 70 ou 90, dans une position par rapport au harnais 10. Les moyens de serrage sont, par exemple, une plaque fixée par deux vis aux moyens de réglage, 955 ou 960, le serrage des vis entrainant le rapprochement de la plaque aux moyens de réglage, 955 ou 960. Ces exemples de réalisation permettent de fixer le bras positionnable, 70 ou 90, par rapport au harnais 10 dans une position avant d'entamer la prise de vue.

Les moyens de réglage 955 créent une distance avec le harnais dans un plan perpendiculaire à l'axe de la tige de mise en position 905 inférieure à la distance entre les moyens de réglage 960 et le harnais dans un plan perpendiculaire à l'axe de la tige de mise en position 905. Préférentiellement, la distance entre les moyens de réglage 955 et le harnais dans un plan perpendiculaire à l'axe de la tige de mise en position 905 est au moins deux fois plus petite que la distance entre les moyens de réglage 960 et le harnais dans un plan perpendiculaire à l'axe de la tige de mise en position 905.

La tige de mise en position 905 peut comporter une tige d'adaptation. La tige d'adaptation s'insère dans la forme intérieure de la tige de mise en position 905 et se bloque en mouvement de manière réversible par des moyens connus de l'homme du métier, tels une vis de serrage après encastrement de la tige d'adaptation dans la tige de mise en position 905. La tige d'adaptation permet de régler la hauteur de la tige de support 920 et donc des moyens de stabilisation 20 et de la caméra 30.

La tige de support 920 est préférentiellement un tronc de cylindre creux. Dans l'exemple représenté, la courbe directrice de la forme intérieure et de la forme extérieure est de forme oblongue et peut être également rectangulaire. Un tronc de cylindre creux permet de limiter le poids du dispositif 60.

Préférentiellement, des câbles électriques passent dans l'intérieur du cylindre creux des tiges, 905 et 920. Les câbles électriques peuvent relier la caméra à une batterie ou tout autre élément électronique détaillé ci-dessus, situé sur le harnais 10.

Plus généralement, dans une représentation filaire des tiges, 905 et 920, les tiges 905 et 920, seraient sensiblement dans un même plan quel que soit l'angle entre la tige de support 920 et la tige de mise en position 905. Préférentiellement la tige de mise en position 905 et la tige de support 920 forment une potence.

Le bras positionnable 90 comporte au moins un moyen de fixation, 915, 935 ou 945, liant deux éléments :
- la tige de mise en position 905 et la tige de support 920,
- la tige de mise en position 905 et l'amortisseur 930, et/ou
- la tige de support 920 et l'amortisseur 930.

Préférentiellement, au moins un moyen de fixation, 915, 935 ou 945, forme au moins une liaison pivot glissant, 910, 940 ou 950, avec l'un des éléments et au moins une liaison rotule avec l'autre élément.

Préférentiellement, au moins un moyen de fixation, 915, 935 ou 945, comporte la coulisse de l'au moins une liaison pivot glissant, l'élément formant coulisseau, le moyen de fixation, 915, 935 ou 945, comportant au moins un levier à came, 1110 ou 1120, pour serrer le coulisseau dans la coulisse.

On rappelle ici, qu'un levier à came est un levier mis en rotation par rapport à une pièce, qui comporte une came circulaire dont le centre est excentré par rapport à l'axe de rotation. La rotation du levier entrainant donc un déplacement de la pièce suivant les dimensions de la came. Et lorsque cette pièce est un coulisseau dans une coulisse, le coulisseau se bloque contre la coulisse.

Préférentiellement, le moyen de fixation, 915, 935 ou 945, comporte deux leviers à came, 1110 et 1120, dont les leviers sont de directions opposées. En d'autres termes, le sens de rotation de chaque levier est opposé. Donc, une translation du coulisseau serre l'un des leviers et desserre l'autre.

Préférentiellement, les axes de rotation des leviers sont parallèles à l'axe de rotation de la liaison pivot, 910, 940 ou 950, du moyen de fixation 915, 935 ou 945. Et les axes de rotation des liaison pivot 910, 940 ou 950, des moyens de fixation 915, 935 ou 945, sont dans un plan perpendiculaire au plan de la représentation filaire des tiges, 905 et 920.

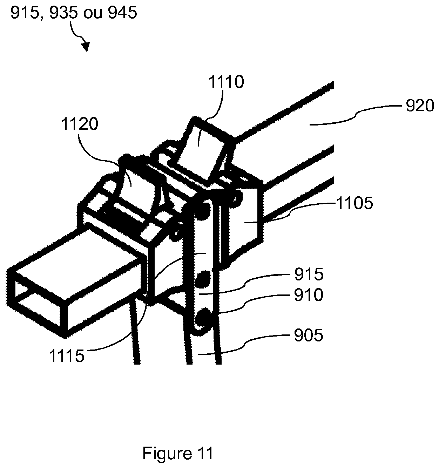

Le moyen de fixation, 915, 935 ou 945, est décrit en regard de la figure 11.

Le bras articulé 90 comporte un premier moyen de fixation 915 entre la tige de mise en position 905 et la tige de support 920, le moyen de fixation 915 forme une liaison glissière avec la tige de support 920 et une liaison pivot 910 avec la tige de mise en position 905. Dans des modes de réalisation non représentés, le moyen de fixation 915 forme une liaison glissière avec la tige de mise en position 905 et une liaison pivot 910 avec la tige de support 920.

Préférentiellement, le moyen de fixation 915 est situé à une extrémité de la tige de mise en position 905 et une extrémité de la tige de support 920. Le moyen de fixation 915 est un moyen de fixation amovible, notamment au niveau de la liaison au moins pivot glissant.

On appelle, une liaison au moins rotule ou au moins une liaison rotule, une liaison qui comporte trois degrés de liberté en rotation. On appelle, une liaison au moins pivot glissant ou au moins une liaison pivot glissant, une liaison qui comporte un degré de liberté en translation et un degré de liberté en rotation. Des liaisons plus restrictives en degrés de libertés rentrent donc dans les définitions ci-dessus.

Préférentiellement, dans lequel chaque tige, 905 et 920, et l'amortisseur 930, comporte un corps et deux extrémités.

Le bras articulé 90 comporte un deuxième moyen de fixation 935 entre la tige de mise en position 905 et l'amortisseur 930, le moyen de fixation 935 forme une liaison glissière avec la tige de mise en position 905 et une liaison pivot 940 avec l'amortisseur 930. Dans des exemples non représentés, le moyen de fixation 935 forme une liaison glissière avec l'amortisseur 930 et une liaison pivot 940 avec la tige de mise en position 905.

Préférentiellement, le moyen de fixation 935 est situé à une extrémité de l'amortisseur 930 et sur le corps de la tige de mise en position 905. Le moyen de fixation 935 est un moyen de fixation amovible, notamment au niveau de la liaison au moins pivot glissant.

Le bras articulé 90 comporte un troisième moyen de fixation 945 entre la tige de support 920 et l'amortisseur 930, le moyen de fixation 945 forme une liaison glissière avec la tige de support 920 et une liaison pivot 950 avec l'amortisseur 930. Dans des exemples non représentés, le moyen de fixation 945 forme une liaison glissière avec l'amortisseur 930 et une liaison pivot 950 avec la tige de support 920.

Préférentiellement, le moyen de fixation 945 est situé à une extrémité de l'amortisseur 930 et sur le corps de la tige de support 920. Le moyen de fixation 945 est un moyen de fixation amovible, notamment au niveau de la liaison au moins pivot glissant.

Préférentiellement, chaque coulisseau présente une section rectangulaire adaptée à la section rectangulaire de chaque coulisse. En d'autres termes, la tige de mise en position 905 et la tige de support 920 présentent des sections rectangulaires.

Préférentiellement, l'amortisseur 930 fonctionne principalement en compression. C'est-à-dire que plus de la moitié des efforts amortis par le premier amortisseur 930, exercent une compression sur le premier amortisseur 930. Le premier amortisseur 930 est un ressort en compression, par exemple. Dans certaines réalisations, le premier amortisseur 930 est un vérin hydraulique ou pneumatique en traction ou en compression.

Dans des modes de réalisation, le bras 90 comporte un deuxième amortisseur est fixé au corps de la tige de mise en position 905 et à une extrémité de la tige de support 920 opposée à l'extrémité supportant la caméra 30. Le deuxième amortisseur est fixé par des moyens de fixations exposés dans la description des figures 1 à 11.

Dans certaines réalisations, le bras 90 comporte plusieurs amortisseurs montés en parallèle.

Préférentiellement, chaque premier et chaque deuxième amortisseur 930 sont situés de part et d'autre de la tige de mise en position 920.

Dans certaines réalisations, le moyen de stabilisation est fixé à une extrémité libre de la tige de support présentant une forme en arc de cercle 970. Préférentiellement, l'angle entre les tangentes à chaque extrémité de l'arc de cercle 970 est inférieur à 45 degrés. L'extrémité en arc de cercle 970 peut être clipsée dans la tige de support 920 dans le prolongement de la tige de support 920.

Dans certaines réalisations, les moyens de fixation 160 ou 765 comportent un élément emmanché dans l'extrémité en arc de cercle 970. L'élément emmanché peut présenter une forme parallélépipédique de dimensions correspondantes aux dimensions de l'extrémité en arc de cercle 970 et une protrusion non emmanchée dans l'extrémité en arc de cercle 970.

L'élément emmanché comporte préférentiellement deux pivots 975 de liaison au moyen de stabilisation 20. Un pivot 975 comporte deux tiges articulées entre-elles par une liaison pivot. Une tige de chaque pivot est fixée autour de l'élément la protrusion de l'élément parallélépipédique de part et d'autre de l'élément parallélépipédique de sorte à être dans le prolongement de la tige de mise en position 920. La liaison pivot du pivot 975 est dans un plan perpendiculaire à un plan d'une représentation filaire de la tige de support 905 et de la tige de mise en position 920. Les pivots permettent de redresser ou d'incliner le matériel de stabilisation pour placer la caméra proche du regard de l'opérateur. L'autre tige de chaque pivot 975 est fixé autour du moyen de stabilisation 20.

Préférentiellement, chaque pivot comporte un moyen de remise en position, tel un ressort. La direction de la force des moyens de remise en position sont positionnées de sens contraire pour rendre la course des pivots plastique. C'est-à-dire qu'en appliquant sur une tige d'un pivot 975 ou sur l'autre, les deux pivots 975 pivotent. Les pivots ne sont donc pas rappelés dans une position mais offrent une résistance pour positionner le plus précisément possible le moyen de stabilisation 20.

La tige de support 920 comporte à l'extrémité en arc de cercle, des moyens de fixation du moyen de stabilisation 20. Les moyens de fixation peuvent enserrer un moyen de commande de la caméra 30. Les moyens de fixation correspondent à au moins un moyen de fixation décrit dans la présente description.

Le bras 90 peut comporter un support de batterie sur le corps de la tige de support 920, du côté opposé des moyens de fixation 915 par rapport à chaque moyen de fixation de la caméra 30. Le support de batterie est par exemple une pince, fixée à la tige de support 920.

Le bras 90 peut comporter au moins un moyen de fixation d'au moins un bras articulé support d'au moins une source de lumière. Le moyen de fixation peut être un anneau serrable par un boulon placé autour de la tige de support 920. L'anneau serrable comportant des moyens de fixation du bras connus de l'homme du métier.

## Revendications

1. Dispositif (60) de prise de vue subjective mains libres, qui comporte :
- un harnais (10) fixé au corps d'un utilisateur,
- une caméra (30) comportant au moins un objectif (305, 310) orienté selon une direction, la caméra étant liée au harnais par un bras positionnable (70, 90) longeant le dos de l'utilisateur, et positionnée au-dessus de l'utilisateur, pour une prise de vue subjective selon ladite direction, le bras positionnable comportant une tige de mise en position (700, 705, 905) sur le harnais articulé avec une tige de support (720, 920) de la caméra et au moins un amortisseur (730, 755, 930) du mouvement entre la tige de mise en position et la tige de support et
- un moyen de stabilisation (20) de la caméra par rapport au harnais situé entre le bras positionnable et la caméra **caractérisé en ce qu'**il comporte, de plus :
- un moyen d'asservissement (210, 225, 240) du moyen de stabilisation en fonction d'au moins une donnée représentative d'une position de la caméra, le moyen d'asservissement étant configuré pour maintenir la caméra selon une position prédéterminée.

2. Dispositif (60) selon la revendication 1, qui comporte au moins un moyen de fixation (915, 935, 945) liant deux éléments :
- la tige de mise en position (905) et la tige de support (920),
- la tige de mise en position et l'amortisseur (930), et/ou
- la tige de support et l'amortisseur.

3. Dispositif (60) selon la revendication 2, dans lequel au moins un moyen de fixation (915, 935, 945) forme une liaison glissière (910, 940, 950) avec l'un des éléments (905, 920, 930) et une liaison pivot avec l'autre élément (905, 920, 930).

4. Dispositif selon la revendication 3, dans lequel au moins un moyen de fixation (915, 935, 945) comporte la coulisse de l'au moins une liaison pivot (910, 940, 950), l'élément formant coulisseau, le moyen de fixation comportant au moins un levier à came (1110, 1120) pour serrer le coulisseau dans la coulisse.

5. Dispositif (60) selon la revendication 4, dans lequel le moyen de fixation (915, 935, 945) comporte deux leviers à came (1110, 1120) dont les leviers sont de directions opposées.

6. Dispositif (60) selon l'une des revendications 1 à 5, dans lequel l'amortisseur (930) fonctionne principalement en compression.

7. Dispositif (60) selon l'une des revendications 1 à 6, dans lequel le moyen de stabilisation (20) est fixé à une extrémité libre de la tige de support (920) présentant une forme en arc de cercle (970).

8. Dispositif (60) selon la revendication 1, dans lequel chaque tige (700, 705, 720) comporte un corps et deux extrémités, l'articulation (710, 715, 720) entre la tige de mise en position (700, 705) et la tige de support (720) est située à une extrémité de la tige de mise en position et sur le corps de la tige de support, la tige support et la tige de mise en position forment une potence.

9. Dispositif (60) selon la revendication 8, qui comporte au moins un premier amortisseur (750) fixé entre une extrémité de la tige de support (720) et le corps de la tige de mise en position (700, 705).

10. Dispositif (60) selon la revendication 9, dans lequel le moyen de stabilisation (20) est fixé à l'extrémité de la tige de support (720) opposée à l'extrémité de fixation de chaque premier amortisseur (755).

11. Dispositif (60) selon l'une des revendications 8 à 10, qui comporte au moins un deuxième amortisseur (730) entre le corps de la tige de support (720) et le corps de la tige de mise en position (700, 705).

12. Dispositif (60) selon la revendication 11, dans lequel chaque premier et chaque deuxième amortisseur (730, 755) sont situés de part et d'autre de la tige de mise en position (700, 705).

13. Dispositif (60) selon l'une des revendications 8 ou 9, dans lequel le deuxième amortisseur (730) est un amortisseur de compression.

14. Dispositif (60) selon l'une des revendications 9 à 13, dans lequel la fixation d'au moins un amortisseur (730, 755) avec la tige de support (720) comporte un moyen de déplacement de la fixation (750, 740) sur la tige de support.

15. Dispositif selon l'une des revendications 1 à 14, qui comporte, au moins un moyen de fixation (760, 765) du moyen de stabilisation (20) à une extrémité de la tige de support (720).

## Patentansprüche

1. Die Erfindung betrifft eine Vorrichtung (60) zur subjektiven freihändigen Bildaufnahme mit:
- einem Gurt (10), der am Körper des Benutzers befestigt wird,
- einer Kamera (30) mit mindestens einem in eine Richtung zeigenden Objektiv (305, 310), wobei die Kamera über einen am Rücken des Benutzers liegenden verstellbaren Arm (70, 90) mit dem Gurt verbunden und über dem Benutzer positioniert ist, um subjektive Bildaufnahmen in dieser Richtung zu machen, wobei der verstellbare Arm über eine Positionierungsstange (700, 705, 905) am Gelenkgurt mit einer Kamerahalterung (720, 920) und mindestens einen Dämpfer (730, 755, 930) der Bewegungen zwischen der Positionierungsstange und der Haltestange verfügt, und
- ein Mittel zur Stabilisierung (20) der Kamera im Verhältnis zum Gurt zwischen dem verstellbaren Arm und der Kamera,
Das außerdem Folgendes umfasst:
- eine Steuervorrichtung (210, 225, 240) für die Stabilisierungsvorrichtung in Abhängigkeit von mindestens einer für eine Kameraposition repräsentativen Angabe, wobei die Steuervorrichtung so konfiguriert ist, dass sie die Kamera in einer vorgegebenen Position hält.

2. Vorrichtung (60) nach Anspruch 1, die mindestens eine Befestigungsvorrichtung (915, 935, 945) aufweist, die zwei Elemente miteinander verbindet:
- Positionierungsstange (905) und Haltestange (920),
- Positionierungsstange und Dämpfer (930), und/oder
- Haltestange und Dämpfer.

3. Vorrichtung (60) nach Anspruch 2, wobei mindestens eine Befestigungsvorrichtung (915, 935, 945) eine Gleitverbindung (910, 940, 950) mit einem der Elemente (905, 920, 930) und eine Drehverbindung mit dem anderen Element (905, 920, 930) herstellt.

4. Vorrichtung nach Anspruch 3, die eine Befestigungsvorrichtung (915, 935, 945), die Gleitschiene für mindestens eine Schwenkverbindung (910, 940, 950) und das Schiebestück umfasst, wobei die Befestigungsvorrichtung mindestens einen Nockenhebel (1110, 1120) zum Festziehen des Schiebeelements in der Gleitschiene besitzt.

5. Vorrichtung (60) nach Anspruch 4, bei der die Befestigungsvorrichtung (915, 935, 945) zwei Nockenhebel (1110, 1120) aufweist, deren Hebel in entgegengesetzte Richtungen zeigen.

6. Vorrichtung (60) nach einem der Ansprüche 1 bis 5, bei der der Dämpfer (930) hauptsächlich unter Druck arbeitet.

7. Vorrichtung (60) nach einem der Ansprüche 1 bis 6, wobei die Stabilisierungseinrichtung (20) an einem freien Ende der Haltestange (920) in Kreisbogenform (970) befestigt ist.

8. Vorrichtung (60) nach Anspruch 1, wobei jede Stange (700, 705, 720) ein Mittelteil und zwei Enden aufweist, wobei die Verbindung (710, 715, 720) zwischen der Positionierungsstange (700, 705) und der Haltestange (720) an einem Ende der Positionierungsstange und am Mittelteil der Haltestange angeordnet ist, wobei die Haltestange und die Positionierungsstange einen Ausleger bilden.

9. Vorrichtung (60) nach Anspruch 8, die mindestens einen ersten Dämpfer (750) besitzt, der zwischen einem Ende der Haltestange (720) und dem Mittelteil der Positionierungsstange (700, 705) befestigt ist.

10. Vorrichtung (60) nach Anspruch 9, wobei die Stabilisierungseinrichtung (20) am Ende der Haltestange (720) befestigt ist, das dem Befestigungsende jedes ersten Stoßdämpfers (755) gegenüberliegt.

11. Vorrichtung (60) nach Anspruch 8 bis 10, die mindestens einen zweiten Dämpfer (730) besitzt, der zwischen dem Mittelteil der Haltestange (720) und dem Mittelteil der Positionierungsstange (700, 705) befestigt ist.

12. Vorrichtung (60) nach Anspruch 11, wobei jeder erste und jeder zweite Dämpfer (730, 755) zu beiden Seiten der Positionierungsstange (700, 705) angeordnet ist.

13. Vorrichtung (60) nach einem der Ansprüche 8 oder 9, bei der der zweite Dämpfer (730) ein Kompressionsdämpfer ist.

14. Vorrichtung (60) nach einem der Ansprüche 9 bis 13, wobei die Befestigung wenigstens eines Stoßdämpfers (730, 755) an der Haltestange (720) eine Möglichkeit zum Verschieben der Halterung (750, 740) an der Haltestange aufweist.

15. Vorrichtung nach einem der Ansprüche 1 bis 14, die wenigstens eine Befestigungsmöglichkeit (760, 765) für die Stabilisierungsvorrichtung (20) an einem Ende der Haltestange (720) aufweist.

## Claims

1. Hands-free subjective image capture device (60), comprising:
- a harness (10) attached to the body of a user;
- a camera (30) including at least one lens (305, 310) oriented in a direction, the camera being connected to the harness by a positionable arm (70, 90) running along the back of the user, and positioned above the user for capturing a subjective image in said direction, the positionable arm comprising a rod (700, 705, 905) for placing in position on the articulated harness with a rod (720, 920) for supporting the camera and at least one damper (730, 755, 930) of the movement between the positioning rod and the supporting rod; and
- a means (20) for stabilizing the camera relative to the harness placed between the positionable arm and the camera
**characterized in that** it also comprises:
- a means (210, 225, 240) for controlling the stabilization means as a function of at least one piece of position data of the camera, the control means being configured to keep the video camera in a predefined position.

2. Device (60) according to claim 1, which comprises at least one attachment means (915, 935, 945) binding two elements:
- the positioning rod (905) and the supporting rod (920);
- the positioning rod and the damper (930); and/or
- the supporting rod and the damper.

3. Device (60) according to claim 2, wherein at least one attachment means (915, 935, 945) forms a sliding link (910, 940, 950) with one of the elements (905, 920, 930), and a pivot link with the other element (905, 920, 930).

4. Device according to claim 3, wherein at least one attachment means (915, 935, 945) comprises the guide slot of the at least one pivot link (910, 940, 950), the element forming a slide, the attachment means comprising at least one cam lever (1110, 1120) for tightening the slide in the guide slot.

5. Device (60) according to claim 4, wherein the attachment means (915, 935, 945) comprises two cam levers (1110, 1120) whose levers are in opposite directions.

6. Device (60) according to one of claims 1 to 5, wherein the damper (930) mainly operates in compression.

7. Device (60) according to one of claims 1 to 6, wherein the stabilization means (20) is attached to a free extremity of the supporting rod (920) having a circular arc shape (970).

8. Device (60) according to claim 1, wherein each rod (700, 705, 720) comprises one body and two extremities, the articulation (710, 715, 720) between the positioning rod (700, 705) and the supporting rod (720) is located at one extremity of the positioning rod and on the body of the supporting rod, the supporting rod and the positioning rod forming a derrick.

9. Device (60) according to claim 8, which comprises at least one first damper (750) attached between one extremity of the supporting rod (720) and the body of the positioning rod (700, 705).

10. Device (60) according to claim 9, wherein the stabilization means (20) is attached to the extremity of the supporting rod (720) opposite the attachment extremity of each first damper (755).

11. Device (60) according to one of claims 8 to 10, which comprises at least one second damper (730) between the body of the supporting rod (720) and the body of the positioning rod (700, 705).

12. Device (60) according to claim 11, wherein each first and each second damper (730, 755) is located either side of the positioning rod (700, 705).

13. Device (60) according to one of claims 8 or 9, wherein the second damper (730) is a compression damper.

14. Device (60) according to one of claims 9 to 13, wherein the attachment of at least one damper (730, 755) with the supporting rod (720) comprises a means for moving the attachment (750, 740) on the supporting rod.

15. Device (60) according to one of claims 1 to 14, which comprises, at least one means for attaching (760, 765) the stabilizing means (20) to one end of the support rod (720).
